# EUROPÄISCHE PATENTANMELDUNG

(11) **EP 1 862 630 A1**
(43) Veröffentlichungstag der Anmeldung: **05.12.2007**
(21) Anmeldenummer: 06011224.0
(22) Anmeldetag: 31.05.2006
(51) Int. Cl.: E05F 15/12

(54) **Verstellsystem eines Kraftfahrzeugs zur Verstellung eines Verschliessteils zum Verschliessen einer Öffnung einer Kraftfahrzeugkarosserie**

(71) Anmelder: Brose Schliesssysteme GmbH & Co. KG, 42369 Wuppertal (DE)
(72) Erfinder: Borrmann, Guido, 45701 Herten (DE); Macht, Alwin, 96250 Ebensfeld (DE); Scheck, Georg, 96479 Weitramsdorf (DE); Johann, Andreas, 42929 Wermelskirchen (DE); Heinrich, Andreas, 42579 Heiligenhaus (DE); Hoffmann, Matthias, 96145 Sesslach (DE); Bauersachs, Andrea, 96237 Ebersdorf (DE)
(74) Vertreter: Gottschald, Jan

(57) **Zusammenfassung**

Verstellsystem eines Kraftfahrzeugs (1) zur Verstellung eines Verschließteils (400), insbesondere einer Heckklappe (400), eines Kofferraumdeckels, einer Schiebe- oder Schwenktür, zum Verschließen einer Öffnung (700) einer Kraftfahrzeugkarosserie (600), mit
- einem ersten sich länglich entlang einer Längsrichtung erstreckendem Gehäuse (100),
- einem zweiten sich länglich entlang derselben Längsrichtung erstreckendem Gehäuse (200), das einen geringeren Querschnitt als das erste Gehäuse (100) aufweist und zumindest teilweise innerhalb des ersten Gehäuses (100) in dieser Längsrichtung verstellbar angeordnet ist,
- einer Spindel (110) zur relativen Verstellung des ersten Gehäuses (100) zum zweiten Gehäuse (200), die innerhalb des ersten Gehäuses (100) und/oder innerhalb des zweiten Gehäuses (200) angeordnet ist,
- einem Elektromotor (150) und einem Getriebe (130), die an dem ersten Gehäuse (100) und/oder an dem zweiten Gehäuse (200) befestigt und mit der Spindel (110) wirkverbunden sind, und
- zumindest einer Feder (291, 292, 293, 294), die innerhalb des ersten Gehäuses (100) und/oder innerhalb des zweiten Gehäuses (200) angeordnet ist und in Längsrichtung wirkt,
wobei
- das Eine der Gehäuse (100, 200) karosserieseitig befestigt und das Andere der Gehäuse (100, 200) verschließteilseitig befestigt ist.

## Beschreibung

Die Erfindung betrifft ein Verstellsystem eines Kraftfahrzeugs zur Verstellung eines Verschließteils zum Verschließen einer Öffnung einer Kraftfahrzeugkarosserie.

Demgemäß ist ein Verstellsystem eines Kraftfahrzeugs zur Verstellung eines Verschließteils zwischen einer geöffneten und einer geschlossenen Position vorgesehen. Das Verschließteil dient dabei zum Verschließen einer Öffnung einer Kraftfahrzeugkarosserie. Ein derartiges Verschließteil ist beispielsweise eine Heckklappe, ein Kofferraumdeckel, ein Motorraum-deckel, eine Fensterscheibe, eine Schiebetür oder eine Schwenktür.

Der Verstellsystem weist dabei mehrere Komponenten auf, die derart aneinander befestigt sind, dass vorzugsweise eine kompakte Bauweise erzielt wird.

Ein erstes Gehäuse des Verstellsystems erstreckt sich länglich entlang einer Längsrichtung. Ein zweites Gehäuse erstreckt sich ebenfalls länglich entlang derselben Längsrichtung. Das zweite Gehäuse weist einen geringeren Querschnitt als das erste Gehäuse auf und ist zumindest teilweise innerhalb des ersten Gehäuses in dieser Längsrichtung verstellbar angeordnet. Vorzugsweise weisen das erste Gehäuse und das zweite Gehäuse dieselbe Querschnittsform auf, so dass vorteilhafterweise das zweite Gehäuse innerhalb des ersten Gehäuses in Längsrichtung verschiebbar gelagert ist. Vorteilhafterweise weisen sowohl das erste Gehäuse als auch das zweite Gehäuse einen runden Querschnitt auf und sind bevorzugt rohrförmig.

Weiterhin weist das Verstellsystem eine Spindel zur relativen Verstellung des ersten Gehäuses zum zweiten Gehäuse auf, die innerhalb des ersten Gehäuses und/oder innerhalb des zweiten Gehäuses angeordnet ist. Dabei können unterschiedliche Spindelarten, wie eine Planetenwälzspindel, eine Kugelrollspindel oder eine Trapezspindel verwendet werden. Während einer Verstellung des Verschließteils bewegt sich die Spindel dabei relativ zu zumindest einem der beiden Gehäuse in Längsrichtung.

Das Wesen der Erfindung besteht in der kompakten Bauweise, so dass ein Elektromotor und ein Getriebe des Verstellsystems an dem ersten Gehäuse und/oder an dem zweiten Gehäuse befestigt und mit der Spindel wirkverbunden sind. Zur Wirkverbindung wirkt beispielsweise ein vom Elektromotor abgegebene und mittels des Getriebes übersetzte Kraft beispielsweise auf die Spindel oder auf eine auf der Spindel angeordnete Spindelmutter. Demzufolge sind der Antrieb aus Elektromotor und Getriebe und die Verstellmechanik, die zumindest die Spindel aufweist, mit dem ersten Gehäuse und dem zweiten Gehäuse zu einer Baueinheit integriert. Demzufolge ist der Elektromotor weder an der Karosserie noch an dem Verschließteil befestigt.

Weiterhin ist zumindest eine Feder des Verstellsystems vorgesehen, die innerhalb des ersten Gehäuses und/oder innerhalb des zweiten Gehäuses angeordnet ist und in Längsrichtung wirkt. Bevorzugt wirkt die Federkraft in Richtung "Öffnen". Das eine Gehäuse ist karosserieseitig befestigt und das andere Gehäuse ist verschließteilseitig befestigt, um die Verstellkraft auf das Verschließteil zu übertragen und um eine Positionsverstellung des Verschließteils zu ermöglichen.

Als Elektromotor kann prinzipiell jeder Motortyp verwendet werden. Der Elektromotor ist vorteilhafterweise ein mechanisch oder elektrisch kommutierter Motor, insbesondere Synchronmotor. Ein Teil des ersten Gehäuses oder des zweiten Gehäuses ist vorteilhafterweise in Doppelfunktion einer Funktion des Elektromotors zugeordnet.

Beispielsweise bildet eine Gehäusewandung zugleich einen magnetischen Rückschluss des Elektromotors oder einen Kühlkörper für Steuerbauelemente.

Eine vorteilhafte Weiterbildung der Erfindung sieht vor, dass der Elektromotor und das Getriebe innerhalb des ersten Gehäuses angeordnet sind. Vorteilhafterweise ist das Getriebe über die Befestigung des Elektromotors gegen radiale Drehung gegenüber dem ersten Gehäuse befestigt. Die Anordnung innerhalb des ersten Gehäuses ermöglicht insbesondere dann eine kompakte Bauform, wenn vorzugsweise die Antriebswelle des Elektromotors und die Spindel parallel, vorzugsweise zueinander fluchtend ausgebildet sind. Vorzugsweise sind zusätzlich oder alternativ der Elektromotor und das Getriebe innerhalb des ersten Gehäuses angeordnet. Vorzugsweise ist das Getriebe über die Befestigung des Elektromotor gegen axiale Verschiebung innerhalb des ersten Gehäuses befestigt. Eine weitere vorteilhafte Ausgestaltung der Erfindung sieht vor, dass das erste Gehäuse in Mehrfachfunktion einen Teil des Getriebes bildet, insbesondere eine Verzahnung aufweist, in die Planetenzahnräder kämmen.

In einer bevorzugten Ausgestaltung der Erfindung ist das Getriebe nicht-selbsthemmend ausgebildet, so dass eine abtriebsseitig auf das Getriebe wirkende Kraft ohne weitere Vorkehrungen zu einer Getriebebewegung führt. Weiterhin ist mit dieser Ausgestaltung der Erfindung auch kombinierbar bevorzugt vorgesehen, dass eine die Spindel aufweisende Verstellmechanik nicht selbsthemmend ausgebildet ist, so dass eine auf das zweite Gehäuse und damit auf das Verschließteil wirkende Kraft zu einer Verstellbewegung der Spindel führt. Die Verstellmechanik weist dabei beispielsweise eine mit der Spindel zusammenwirkende Spindelmutter auf.

Um insbesondere ein ungewolltes Verstellen der Verstellposition des Verschließteils zu verhindern ist in einer vorteilhaften Weiterbildung der Erfindung eine Bremse vorgesehen, die an dem ersten Gehäuse und/oder an dem zweiten Gehäuse befestigt und mit dem Getriebe und/oder mit dem Elektromotor wirkverbunden ist. Teilfunktionen der Bremse können vorteilhafterweise ebenfalls durch Bereiche des ersten und/oder zweiten Gehäuses bewirkt werden. Eine besonders bevorzugte Weiterbildung der Erfindung sieht vor, dass die Bremswirkung der Bremse sowohl durch eine manuelle Krafteinwirkung auf das Schließteil als auch durch elektromotorische Kraft des Elektromotors aufhebbar ist.

Die Erfindung weiterbildend ist eine Sensorvorrichtung zur Sensierung der Verstellung vorgesehen, die an dem ersten Gehäuse und/oder an dem zweiten Gehäuse befestigt ist und insbesondere mit einer Antriebsbewegung des Elektromotors wirkverbunden ist. Vorteilhafterweise wird als Sensor ein Hallsensor verwendet, der mit einem auf einer Motorwelle angeordneten Magneten zusammenwirkt, um die Drehbewegung der Motorwelle zu sensieren.

Zwar ist es prinzipiell auch möglich, eine Spindelmutter durch elektromotorische Kraft anzutreiben und die Spindel drehfest zu lagern, eine bevorzugte Ausgestaltung der Erfindung sieht jedoch vor, dass die Spindel durch den Elektromotor und das Getriebe für eine Spindeldrehbewegung antreibbar ist.

Eine bevorzugte Ausgestaltung der Erfindung sieht vor, dass auf einer Trapezspindel eine Spindelmutter angeordnet ist, wobei die Verstellmechanik aus Trapezspindel und Spindelmutter nicht-selbsthemmend ausgebildet ist. Eine bevorzugte Ausgestaltung sieht vor, dass zur relativen Verstellung des ersten Gehäuses zum zweiten Gehäuse, das Eine der Gehäuse mit der Spindelmutter axial ortsfest und das Andere der Gehäuse mit der Spindel axial ortsfest verbunden ist. Die Verbindung ist dabei vorzugsweise eine Fixierung.

Gemäß einer bevorzugten Weiterbildung der Erfindung ist vorgesehen, dass ein erstes Ende der Feder bezüglich des ersten Gehäuses in Längsrichtung und ein zweites Ende der Feder bezüglich des zweiten Gehäuses in Längsrichtung ortsfest gelagert ist. Als Feder können unterschiedliche Federtypen, wie Spiralfeder, Zug- oder Druckfedern oder Gasdruckfedem verwendet werden, wobei mehrere unterschiedliche Federn auch miteinander kombiniert werden können. Bevorzugt sind zumindest zwei Feder parallel oder in Reihe geschaltet, wobei die Federn in einer besonders vorteilhaften Ausgestaltung der Erfindung radial zumindest teilweise ineinander verschachtelt sind.

Die Erfindung vorteilhaft weiterbildend ist ein Lager zur Befestigung des ersten Gehäuses und/oder des zweiten Gehäuses an der Karosserie beziehungsweise an dem Schließteil vorgesehen, wobei das Lager vorzugsweise ein Drehlager und/oder ein Schwenklager ist.

Ein weiterer wichtiger Aspekt der Erfindung ist eine Integration zumindest eines Teils der Steuerelektronik in das erste und/oder zweite Gehäuse. Hierzu ist in einer vorteilhaften Weiterbildung der Erfindung vorgesehen, dass zumindest ein Leistungsschalter, insbesondere ein Leistungshalbleiter, der mit dem Elektromotor zu dessen Steuerung elektrisch verbindbar oder verbunden ist. Vorzugsweise ist dieser Leistungsschalter innerhalb des ersten Gehäuses angeordnet und vorteilhafterweise thermisch mit dem ersten Gehäuse zur Ableitung von Verlustwärme verbunden. Vorzugsweise sind innerhalb des ersten und/oder zweiten Gehäuses Kabel zur Energieversorgung des Elektromotors und/oder zur Signalübertragung, insbesondere von Sensorsignalen angeordnet.

Im folgenden wird die Erfindung in Ausführungsbeispielen anhand von Zeichnungen näher erläutert.

Dabei zeigen
- Figur 1: eine Ansicht einer Heckklappe in geöffneter Position,
- Figur 2: Außenansicht eines Heckklappenverstellsystems,
- Figur 3: eine Schnittansicht durch das Heckklappenverstellsystem, und
- Figur 4: eine Detailansicht der Schnittansicht.

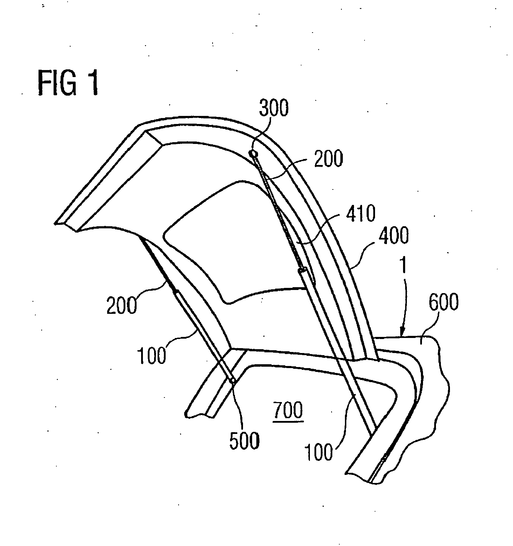

In Fig. 1 ist eine dreidimensionale Detailansicht eines Kraftfahrzeugs 1 mit einer geöffneten Heckklappe 400 dargestellt. Die Karosserie 600 und die durch die Heckklappe 400 verschließbare Öffnung 700 in der Karosserie 600 des Kraftfahrzeugs 1 sind lediglich schematisch dargestellt. Neben einem Außenblech weist die dargestellte Heckklappe 400 eine gegebenenfalls versenkbare Fensterscheibe 410 und ein Verstellsystem mit einem ersten Gehäuse 100, einem zweiten Gehäuse 200, einem ersten Lager 300 und einem zweiten Lager 500 auf. In Fig. 1. sind zwei derartige Verstellsysteme dargestellt, die zusammen eine Verstellung der Heckklappe 400 zwischen einer geschlossenen Position und einer in Fig. 1 dargestellten geöffneten Position bewirken.

Weitere nicht in den Figuren dargestellte Ausführungsbeispiele sehen ein Verstellsystem eines Kraftfahrzeugs zur Verstellung eines anderen Verschließteils als eine Heckklappe 400 vor. Insbesondere kann das Verstellsystem zur Verstellung eines Kofferraumdeckels, einer Schiebe- oder Schwenktür verwendet werden, um eine Öffnung einer Kraftfahrzeugkarosserie zu verschließen.

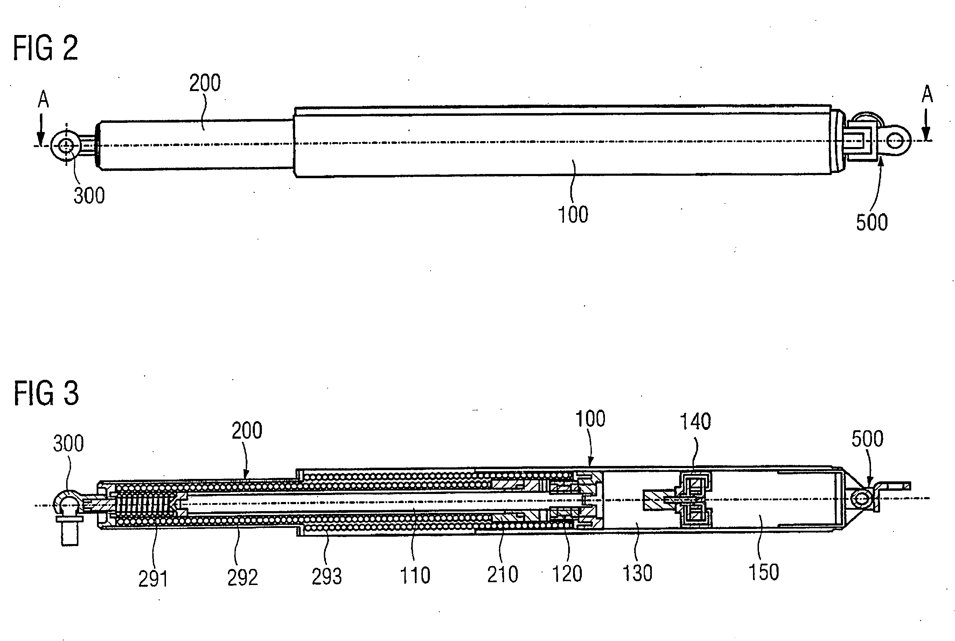

In Fig. 2 ist ein Verstellsystem in Detailansicht dargestellt. Das Verstellsystem weist ein erstes sich länglich entlang einer Längsrichtung erstreckendes Gehäuse 100 in Form eines Außenrohres 100 auf. Ein zweites Gehäuse 200, ebenfalls in Form eines Außenrohres 200 erstreckt sich ebenfalls länglich entlang derselben Längsrichtung. Das zweite Außenrohr 200 weist einen geringeren Querschnitt als das erste Außenrohr 100 auf und das zweite Außenrohr 200 ist zumindest teilweise innerhalb des ersten Außenrohres 100 in der genannten Längsrichtung verstellbar angeordnet.

Das erste Außenrohr 100 ist karosserieseitig befestigt, während das zweite Außenrohr 200 heckklappenseitig befestigt ist. Zur Befestigung ist dem dargestellten Ausführungsbeispiel jeweils ein Lager 300, 500 vorgesehen. Das erste Lager 500, das an dem ersten Außenrohr 100 fixiert ist, weist hierzu vorzugsweise zwei Kardanverbindungen auf. Das zweite Lager 300, das an dem zweiten Außenrohr 200 fixiert ist weist hierzu vorzugsweise eine Kugelpfanne auf.

Fig. 3 zeigt eine Schnittansicht durch ein Verstellsystem der Fig. 2. Zumindest teilweise innerhalb des ersten Außenrohres 100 ist ein Elektromotor 150, eine Bremse 140, ein zweistufiges Planetengetriebe 130 und eine Verstellmechanik mit einer sechsgängigen Trapezspindel 110 und einer auf der Trapezspindel 110 drehend gelagerten Spindelmutter 210, angeordnet. Diese in der Fig. 3 dargestellten Elemente beeinflussen dabei die Kraftwirkungskette von dem Elektromotor 150 auf die Verstellung der Heckklappe 400. Zwischen dem Elektromotor 150 und dem Planetengetriebe 130 wirkt eine Bremse 140, die ermöglicht, dass die Bremswirkung sowohl durch eine manuelle Krafteinwirkung auf die Heckklappe 400 als auch durch elektromotorische Kraft des Elektromotors 150 aufhebbar ist. Die Bremse 140 ist dabei innerhalb des ersten Außenrohres 100 zwischen dem Elektromotor 150 und dem Planetengetriebe 130 integriert.

Wird der Elektromotor 150 beispielsweise durch einen in Fig. 3 nicht dargestellten, aber vorzugsweise ebenfalls innerhalb des ersten Außenrohres 100 angeordneten Leistungsfeldeffekttransistor gesteuert; wird das vom Elektromotor 150 abgegebene Moment abzüglich einer geringen Reibung der Bremse 140 auf das zweistufige Planetengetriebe 130 übertragen. Das durch das Planetengetriebe 130 übersetzte Moment wird an die Trapezspindel 110 abgegeben, die sich in Abhängigkeit von der Bestromung des Elektromotors 150 dreht.

Durch die Drehung der Trapezspindel 110 wird die Spindelmutter 210 in axialer Richtung verstellt. Dabei ist die Spindelmutter 210 mit dem zweiten Außenrohr 200 derart wirkverbunden, dass das zweite Außenrohr 200 mit der Spindelmutter 210 gleichsinnig mit verstellt wird. Vorzugsweise ist hierzu die Spindelmutter 210 an dem zweiten Außenrohr 200 oder einem mit dem zweiten Außenrohr 200 fest verbunden Teil fixiert.

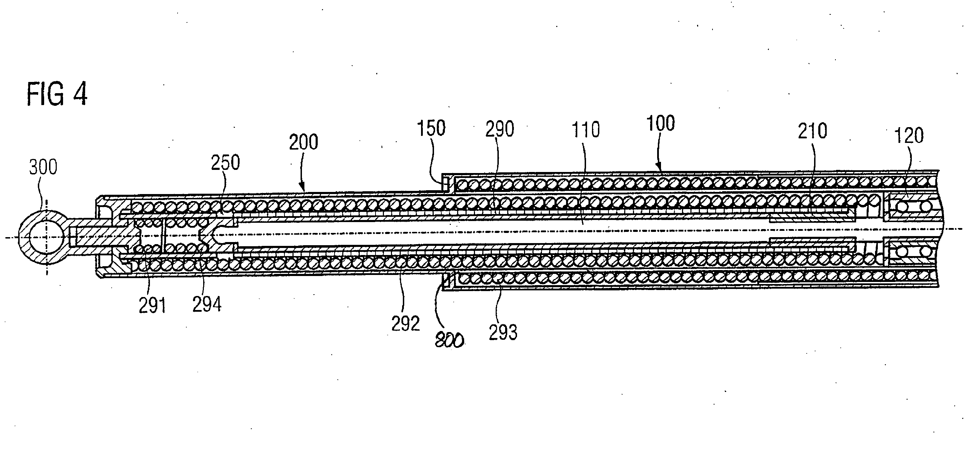

Eine Ausschnitt der Schnittansicht der Fig. 3 ist in der Fig. 4 vergrößert dargestellt. Fig. 4 zeigt eine Spindelführung 250 und ein Schrägkugellager 120 zur Lagerung der drehbaren Spindel 110. Zwischen dem ersten Außenrohr 100 und dem zweiten Außenrohr 200 ist ein Verbindungsring 160 vorgesehen. Das erste Außenrohr 100 und das zweite Außenrohr 200 sind vorzugsweise gegeneinander verdrehsicher geführt.

Innerhalb der beiden Außenrohre 100, 200 sind mehrere Federn 291. 292, 293 und 294 angeordnet, wobei zumindest zwei der Feder 291, 292, 293 oder 294 vorzugsweise in Reihe und/oder zumindest zwei der Federn 291, 292, 293 oder 294 parallel geschaltet sind. Alle Federn 291, 292, 293 und 294 wirken dabei in Längsrichtung, um ein Öffnen der Heckklappe 400 gegen die Gewichtskraft der Heckklappe 400 zu unterstützen. Zudem ist vorzugsweise zumindest ein Führungselement 290 zur Führung der Federbewegung vorgesehen.

Im Ausführungsbeispiel der Fig. 3 ist in der Kraftwirkungskette zwischen dem Motor 150 und der Spindel 110 eine schaltbare Bremse vorgesehen, die auch als Kupplung bezeichnet werden kann. Wird beispielsweise anstelle des Planetengetriebes 130 ein Stirnradgetriebe verwendet, ist die schaltbare Bremse 140 derart als Kupplung ausgebildet, dass im entkoppelten Zustand eine Kraftkette zwischen Spindel 110 und Motor 150 unterbrochen ist. Wird hingegen ein hingegen ein Planetengetriebe 130 verwendet, wird für eine Kraftübertragung vom Motor 150 zur Spindel 110 beispielsweise ein Hohlrad, im Hohlrad laufende Planetenräder oder ein Sonnenrad gebremst.

Die Federn 291, 292 und 293 sind ineinander verschachtelt angeordnet um eine kompakte Bauform des Verstellsystems auszubilden. Zur Ineinanderschachtelung kann zusätzlich eine Hülse, 800 vorgesehen sein, die ein Reiben der Federn 291, 292 und 293 aneinander verhindern und eine gleitende Führung ermöglichen. Hierzu ist die Hülse 800 zwischen zwei der Feder 291, 292 und 293 angeordnet, so dass die Federn 291, 292 und 293 und die Hülse 800 radial ineinander geschachtelt sind.

### Bezugszeichenliste

- 1: Kraftfahrzeug
- 100: erstes Gehäuse, erstes Außenrohr
- 110: Trapezspindel
- 120: Kugellager, Schrägkugellager
- 130: zweistufiges Planetengetriebe / Stirnradgetriebe
- 140: schaltbare Bremse / Kupplung
- 150: Elektromotor
- 160: Verbindungsring
- 200: zweites Gehäuse, zweites Außenrohr
- 210: Spindelmutter
- 250: Spindelführung
- 290: Führung einer Feder
- 291,292,293,294: Zugfeder, Druckfeder
- 300: Lager, Kugelpfanne
- 400: Heckklappe
- 410: Heckklappenscheibe
- 500: Lager mit zwei Kardanverbindungen
- 600: Fahrzeugkarosserie
- 700: Öffnung in der Fahrzeugkarosserie für die Heckklappe

## Patentansprüche

1. Verstellsystem eines Kraftfahrzeugs (1) zur Verstellung eines Verschließteils (400), insbesondere einer Heckklappe (400), eines Kofferraumdeckels, einer Schiebe- oder Schwenktür, zum Verschließen einer Öffnung (700) einer Kraftfahrzeugkarosserie (600), mit
- einem ersten sich länglich entlang einer Längsrichtung erstreckendem Gehäuse (100),
- einem zweiten sich länglich entlang derselben Längsrichtung erstreckendem Gehäuse (200), das einen geringeren Querschnitt als das erste Gehäuse (100) aufweist und zumindest teilweise innerhalb des ersten Gehäuses (100) in dieser Längsrichtung verstellbar angeordnet ist,
- einer Spindel (110) zur relativen Verstellung des ersten Gehäuses (100) zum zweiten Gehäuse (200), die innerhalb des ersten Gehäuses (100) und/oder innerhalb des zweiten Gehäuses (200) angeordnet ist,
- einem Elektromotor (150) und einem Getriebe (130), die an dem ersten Gehäuse (100) und/oder an dem zweiten Gehäuse (200) befestigt und mit der Spindel (110) wirkverbunden sind, und
- zumindest einer Feder (291, 292, 293, 294), die innerhalb des ersten Gehäuses (100) und/oder innerhalb des zweiten Gehäuses (200) angeordnet ist und in Längsrichtung wirkt,
wobei
- Eines der Gehäuse (100, 200) karosserieseitig befestigt und ein Anderes der Gehäuse (100, 200) verschließteilseitig befestigt ist.

2. Verstellsystem nach Anspruch 1
**dadurch gekennzeichnet, dass**
der Elektromotor (150) und das Getriebe (130) zumindest teilweise innerhalb des ersten Gehäuses (100) angeordnet und gegen radiale Drehung gegenüber dem ersten Gehäuse (100) befestigt sind.

3. Verstellsystem nach einem der Ansprüche 1 oder 2,
**dadurch gekennzeichnet, dass**
der Elektromotor (150) und das Getriebe (130) zumindest teilweise innerhalb des ersten Gehäuses (100) angeordnet und gegen axiale Verschiebung gegenüber dem ersten Gehäuse (100) befestigt sind.

4. Verstellsystem nach einem der vorhergehenden Ansprüche,
**gekennzeichnet durch** eine Kupplung oder
eine Bremse (140), die innerhalb des ersten Gehäuses (100) oder innerhalb des zweiten Gehäuses (200) angeordnet und mit dem Getriebe (130) und/oder mit dem Elektromotor (150) wirkverbunden ist.

5. Verstellsystem nach Anspruch 4,
**dadurch gekennzeichnet, dass**
die Bremswirkung der Bremse (140) sowohl durch eine manuelle Krafteinwirkung auf das Schließteil (400) als auch durch elektromotorische Kraft des Elektromotors (150) aufhebbar ist.

6. Verstellsystem nach einem der vorhergehenden Ansprüche,
**gekennzeichnet durch**
ein Sensorvorrichtung zur Sensierung der Verstellung, die an dem ersten Gehäuse (100) und/oder an dem zweiten Gehäuse (200) befestigt ist und insbesondere mit einer Antriebsbewegung des Elektromotors (150) wirkverbunden ist.

7. Verstellsystem nach einem der vorhergehenden Ansprüche,
**dadurch gekennzeichnet, dass**
die Spindel (110) durch den Elektromotor (150) und das Getriebe (130) für eine Spindeldrehbewegung antreibbar ist.

8. Verstellsystem nach einem der vorhergehenden Ansprüche,
**gekennzeichnet durch**
eine Spindelmutter (210), wobei zur relativen Verstellung des ersten Gehäuses (100) zum zweiten Gehäuse (200), Eines der Gehäuse (100, 200) mit der Spindelmutter (210) axial ortsfest und ein Anderes der Gehäuse (100, 200) mit der Spindel (110) axial ortsfest verbunden ist.

9. Verstellsystem nach einem der vorhergehenden Ansprüche,
**dadurch gekennzeichnet, dass**
ein erstes Ende der Feder (291, 292, 293, 294) bezüglich des ersten Gehäuses (100) in Längsrichtung ortsfest gelagert ist und ein zweites Ende der Feder (291, 292, 293, 294) bezüglich des zweiten Gehäuses (200) in Längsrichtung ortsfest gelagert ist.

10. Verstellsystem nach einem der vorhergehenden Ansprüche,
**gekennzeichnet durch**
ein Lager (300, 500) zur Befestigung des ersten Gehäuses (100) und/oder des zweiten Gehäuses (200) an der Karosserie (600) beziehungsweise an dem Schließteil (400),
wobei das Lager (300, 500) vorzugsweise ein Drehlager und/oder ein Schwenklager ist.

11. Verstellsystem nach einem der vorhergehenden Ansprüche,
**gekennzeichnet durch**
zumindest einen Leistungsschalter, insbesondere einem Leistungshalbleiter, der mit dem Elektromotor (150) zu dessen Steuerung elektrisch verbindbar oder verbunden ist und innerhalb des ersten Gehäuses (100) angeordnet und vorzugsweise thermisch mit dem ersten Gehäuse (100) zur Ableitung von Verlustwärme verbunden ist.
